Europäisches Patentamt

European Patent Office

Office européen des brevets

(19)

(11) Publication number: 0 310 415
A2

## (12) EUROPEAN PATENT APPLICATION

(21) Application number: 88309096.1

(22) Date of filing: 30.09.88

(51) Int. Cl.⁴: A 23 P 1/08

(30) Priority: 02.10.87 GB 8723218

(43) Date of publication of application:
05.04.89 Bulletin 89/14

(84) Designated Contracting States:
AT BE CH DE ES FR GB GR IT LI NL SE

(71) Applicant: UNILEVER PLC
Unilever House Blackfriars P.O. Box 68
London EC4P 4BQ (GB)

(84) Designated Contracting States: GB

(71) Applicant: UNILEVER NV
Burgemeester s'Jacobplein 1 P.O. Box 760
NL-3000 DK Rotterdam (NL)

(84) Designated Contracting States:
BE CH DE ES FR GR IT LI NL SE AT

(72) Inventor: Savoni, Edoardo
21 Webb Road
Raunds Northamptonshire NN9 6HH (GB)

(74) Representative: Tate, Rodney Vevers et al
UNILEVER PLC Patents Division P.O. Box 68 Unilever
House
London EC4P 4BQ (GB)

(54) Device for use in food product.

(57) Batter applying unit comprising a first container (1) for holding a quantity of batter (2) and a feeding conveyor (3) for advancing food items through the batter, wherein the shape of the first container (1) corresponds to the shape of the infeed part (4) of the feeding conveyor.

Preferably the first container (1) is V-shaped, and the angle between the two sides forming the V shape is between. 140 and 160°.

EP 0 310 415 A2

**Description**

## DEVICE FOR USE IN FOOD PREPARATION

This invention relates to a batter application unit comprising a container for holding a quantity of batter and a feeding conveyor for advancing the food items through the batter.

A conventional method for obtaining coated food products such as for instance coated meat or fish pieces involves the application of a batter layer to the food product, followed by the application of a layer of breading material such as e.g. roasted breadcrumbs, and optionally repeating the steps of battering and breading.

On industrial scale the application of a batter to a food product is usually carried out in a so-called batter application unit which comprises a container holding an amount of batter, and one or more conveyors for feeding the food products through the batter. Such a batter application unit is described in US patent 4 142 001.

The use of conventional batter application units entails several disadvantages, which are all related to degradation of the quality of the batter in the container.

Firstly, standard batters often contain an amount of a gasifying agent such as, for example, ammonium- and/or sodium-bicarbonate. These gasifying agents tend to degrade upon exposure to air, causing the quality of the batter to decrease during the time the batter is kept in the open container and thus giving coated food products of variable quality. Secondly, during batter coating, especially in the case where after breading a food product is battered for a second time, major amounts of breadcrumbs or other particulates fall into the batter, thus giving a batter containing substantial amounts of particulate material. Until now this degradation of the batter rendered it necessary to stop the battering unit at regular time intervals to remove the batter and replace it. As a matter of fact this gives both a loss in time and a loss in material.

Furthermore when aerated batters are used, the incorporated air or other gas tends to escape from the batter during the time that the batter is kept in the open container, which again gives a decreased quality of the batter and the coated product.

The invention relates to a batter application unit which, during use, overcomes these disadvantages.

Thus according to the invention there is provided a batter applying unit comprising a first container for holding a quantity of batter and a feeding conveyor for advancing food items through the batter, wherein the feeding conveyor has an infeed part and a return part and the shape of the container corresponds to the shape of the infeed part of the feeding conveyor.

The expression "infeed part of the conveyor" refers to that part of the feeding conveyor which during use is submerged in the batter. Usually batter application units are provided with one or more endless belt conveyors. During use the infeed part of the feeding conveyor is submerged in the batter and carries food items through the batter. The other part of the feeding conveyor is referred to as the return part of the feeding conveyor. As a matter of fact each point of the conveyor belongs, during every revolution of the endless belt, to the infeed part and then to the return part of the conveyor.

The shape of the container corresponds to the shape of the infeed part of the conveyor. This means that the container is in general parallel to and spaced at a small distance from the infeed part of the conveyor. Usually the conveyor will be slightly curved, this would imply that for being exactly parallel the container would have to follow this curve. This however is often difficult to make and would therefore increase the production costs of the batter application unit considerably. It is therefore preferred to adapt the shape of the container to the shape of the infeed part of the conveyor only as far as the production of the unit is still economically feasible. It has been found that a container which is substantially V-shaped is in some instances preferred. This type of container is easy to assemble at low production costs.

For use on an industrial scale, it is preferred to maximize the area of the part of the feeding conveyor which will be submerged in the batter without the need for an increased amount of batter. Therefore it is preferred to have a container which, despite the fact that it only contains a small amount of batter, nevertheless allows a substantial area of the feeding conveyor to be submerged. In the case of a curved container this is possible by using a container having a large radius of curvature. In the case of a V-shaped container it is preferred that the angle between the two bottom-plates of the container is between 140 and 160°.

In the coating of food products having a specific weight which is less than the specific weight of the batter it is preferred to provide means for submerging the food items. To this end it is preferred that the batter application unit according to the invention also comprises a top conveyor for holding the food items submerged in the batter.

For maximising the contact area between the food items and the batter it is preferred that each conveyor is a meshed endless belt.

Preferably the distance between the infeed part of the feeding conveyor and the bottom of the container is generally less than 5 cm, more preferably less than 3 cm.

It is also preferred that during normal use, the ratio of the volume of batter above the infeed part of the feeding conveyor to the volume of batter between the infeed part of the feeding conveyor and the bottom of the container is more than 1:1, more preferably more than 2:1, most preferably between 2:1 and 5:1.

Preferably the batter application unit comprises a second container which is located under the first container and which serves as collecting device for batter which drips from the return part of the conveyor. The size of this second container is by no means critical, but as a matter of fact the size should not be greater than necessary in order to reduce material costs during production and factory space during actual use.

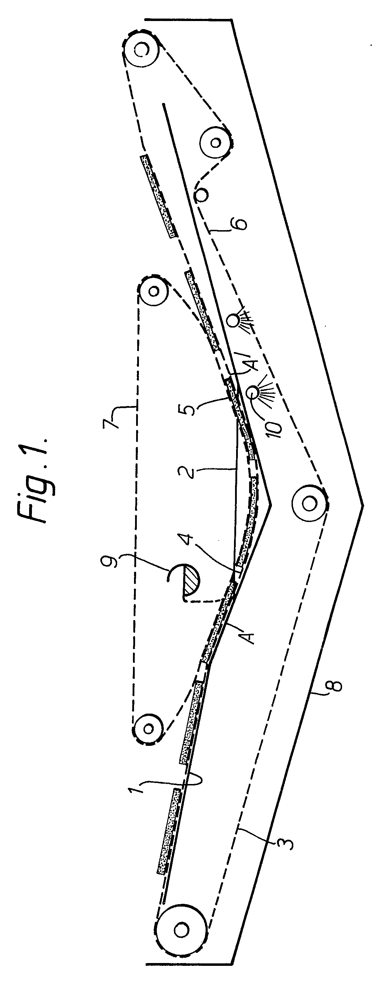

The invention will be further illustrated by means of figure 1.

Figure 1 shows an embodiment of a batter application unit according to the invention comprising a first container 1 which holds a quantity of batter 2, and a feeding conveyor 3. The feeding conveyor 3 is arranged so that part thereof, the infeed part 4 situated between points A and A¹, is submerged in the batter and another part thereof, the return part 6, passes underneath the first container. A further conveyor 7 is arranged to keep the food items submerged in the batter. Both conveyors 3, 7 are meshed endless belts. Food items 5 are carried by the feeding conveyor. A second container 8 is provided for collecting the batter which drips from the return part 6 of the feeding conveyor. A feeding pipe 9 is provided for continuously feeding batter to the first container 1 during operation. The return part 6 of the feeding conveyor is washed by means of spray heads 10. The actual size of the batter application unit is approximately 100 cm from side to side. The distance between the infeed part 4 of the feeding conveyor and the first container 1 is generally less than three cm.

The first container is substantially V-shaped, the angle between the sides of the container forming the V-shape being approximately 150°.

**Claims**

1. Batter applying unit comprising a first container (1) for holding a quantity of batter (2) and a feeding conveyor (3) for advancing food items (5) through the batter, the feeding conveyor having an infeed part (4) and a return part (6), and the unit being characterised in that the shape of the container (1) corresponds to the shape of the infeed part (4) of the feeding conveyor.

2. Batter applying unit according to claim 1, characterised in that the first container (1) is substantially V-shaped.

3. Batter applying unit according to claim 2, characterised in that the angle between the sides of the container forming the V-shape is between 140 and 160°.

4. Batter applying unit according to claims 1-3, characterised in that the unit further comprises a top conveyor (7) for holding the food items (5) in a submerged position in relation to the batter (2).

5. Batter applying unit according to claims 1-4, characterised in that each of the conveyors (3, 7) is formed as a meshed endless belt.

6. Batter applying unit according to claims 1-5, characterised in that the distance between the infeed part (4) of the feeding conveyor and the bottom of the first container (1) is less than 5 cm.

7. Batter application unit according to claims 1-6, characterised in that during use, the ratio of the volume of batter above the infeed part (4) of the feeding conveyor to the volume of batter between the infeed part (4) of the feeding conveyor and the bottom of the first container (1) is more than 1:1.

8. Batter application unit according to claims 1-7, characterised in that the unit further comprises a second container (8) for collecting batter which drips of the return part (6) of the feeding conveyor.

9. Batter application unit according to claims 1-8, characterised in that the unit further comprises a dispensing means (9) for feeding batter (2) to the first container (1) during use.

10. Batter application unit according to claim 1, characterised in that the return part (6) of the feeding conveyor passes underneath the first container (1).

*Fig .1.*

EP 0 310 415 A2